# EUROPÄISCHE PATENTSCHRIFT

(11) **EP 1 294 848 B1**
(45) Veröffentlichungstag und Bekanntmachung des Hinweises auf die Patenterteilung: **10.11.2004**
(21) Anmeldenummer: 01960357.0
(22) Anmeldetag: 22.06.2001
(51) Int. Cl.: C12M 1/00

(54) **BIOREAKTOR ZUR MIKROBIELLEN KONVERTIERUNG STÜCKIGER UND/ODER PASTÖSER STOFFE**
BIOREACTOR FOR MICROBIAL CONVERSION OF SUBSTANCES IN LUMP AND/OR PASTE FORM
BIOREACTEUR POUR LA CONVERSION MICROBIENNE DE SUBSTANCES EN MORCEAUX ET / OU PATEUSES

(30) Priorität: 23.06.2000 DE 10029668
(43) Veröffentlichungstag der Anmeldung: 26.03.2003
(73) Patentinhaber: Biosal Anlagenbau GmbH, 04651 Bad Lausick (DE)
(72) Erfinder: SATTLER, Jörg, 04651 Bad Lausick (DE); SATTLER, Dieter, 04651 Bad Lausick (DE)
(74) Vertreter: GROSSE BOCKHORNI SCHUMACHER
(86) Internationale Anmeldenummer: PCT/EP2001/007102
(87) Internationale Veröffentlichungsnummer: WO 2001/098452

(56) Entgegenhaltungen:
- EP-A- 0 599 661
- WO-A-96/11892
- DE-A- 2 856 553
- DE-A- 4 414 387
- DE-A- 19 520 813
- DE-A- 19 629 129
- US-A- 2 880 074
- US-A- 3 041 157

## Beschreibung

Die Erfindung betrifft einen Bioreaktor zur mikrobiellen Konvertierung stückiger und/oder pastöser Stoffe, insbesondere zum aeroben Abbau von Abfallstoffen mit einem wesentlichen Anteil organischer Stoffe.

Aus der DE-A-2 856 553 sind eine Vorrichtung und ein Verfahren zum beschleunigten biologisch-chemischen Abbau von Müll-Klärschlamm-Gemischen bekannt.

Aus der DE-19629129 A1 sind ein Verfahren und eine Vorrichtung zur mikrobiellen Konvertierung organischer Reststoffe bekannt.

Die zur Durchführung des Verfahrens entwickelte Anlage umfaßt als Kernstück einen gegenüber der Umgebung wärmeisolierten Rohrreaktor.

Das in seiner Hauptfunktionsstellung im wesentlichen waagerecht angeordnete Rohr des Rohrreaktors weist einen im wesentlichen U-förmigen Querschnitt auf, und im Rohr ist, koaxial zu dessen Längsachse, ein Segmentschneckenförderer angeordnet. Der Segmentschneckenförderer dient zum einen zur gleichmäßigen Befüllung des Reaktorraumes, indem die Abfallstoffe, in Förderrichtung gesehen, am Anfang des Förderers eingegeben werden und durch Drehung des Förderers in Förderrichtung in den Reaktorraum gleichmäßig verteilt zugeführt werden.

Nach der Befüllung dient der Segmentschneckenförderer zum Durchmischen der zu konvertierenden Abfallstoffe, indem er zeitintervallgesteuert in und entgegen der Förderrichtung gedreht wird, wobei paddelartig ausgebildete Segmente des Schneckenförderers die Abfallstoffe bewegen und ständig andere Bereiche der Abfallstoffe mit einem Luftstrom in Berührung bringen, der ständig oberhalb der Abfallstoffe entlanggeführt wird, um für eine möglichst schnelle und gründliche aerobe Zersetzung der organischen Bestandteile der Abfallstoffe zu sorgen. Der Luftstrom, der sich infolge der bakteriellen Reaktionen erwärmt, wird beim Ausleiten durch einen Wärmetauscher und ein Filter geführt, und die rückgewonnene Wärme wird zum Vorwärmen neu zugeführter Luft verwendet, um die Reaktion weiter zu beschleunigen.

Diese bekannte Vorrichtung hat den Nachteil, daß die durch den Segmentförderer bewirkte Durchmischung der Abfallstoffe nicht ausreicht, um eine solche Luftzuführung zu den Oberflächen der Abfallstoffe zu gewährleisten, welche für eine optimale und nahezu ausschließlich aerobe Konvertierung der Abfallstoffe erforderlich ist.

Außerdem hat sich gezeigt, daß die paddelartig ausgebildeten Segmente, je nach Beschaffenheit der Abfallstoffe, teilweise zu hohen Gegenkräften ausgesetzt sind, die so hoch sind, daß die kontinuierliche Durchmischungsfunktion des Segmentschneckenförderers vor allem bei pastöser und zäher Beschaffenheit der Abfallstoffe gestört ist, was in Extremfällen zu Getriebeschäden im Antrieb und zum Deformieren und Brechen der Segmente führen kann.

Der Erfindung liegt deshalb die Aufgabe zugrunde, einen Bioreaktor zu entwickeln, mit welchem eine optimale Zuführung von Gasen, z. B. von Luft, zu den im Reaktor zu konvertierenden Stoffen möglich ist, und bei welchem auch bei pastösen und zähen Stoffen keine Funktionsstörungen des Segmentschneckenförderers zu erwarten sind.

Die Aufgabe wird in erfinderischer Weise durch die kennzeichnenden Merkmale des Hauptanspruches 1 gelöst. Vorteilhafte Ausführungsformen der Erfindung bilden die Merkmale der Unteransprüche 2 bis 7.

Die Erfindung soll nachfolgend anhand zweier bevorzugter Ausführungsbeispiele in Verbindung mit den Figuren 1 bis 4 näher erläutert werden.

Die Zeichnungen zeigen:
- In Figur 1: ist schematisch ein Querschnitt durch einen erfindungsgemäßen Bioreaktor eines ersten bevorzugten Ausführungsbeispieles dargestellt.
- In Figur 2: ist schematisch ein Querschnitt durch einen erfindungsgemäßen Bioreaktor eines zweiten bevorzugten Ausführungsbeispieles dargestellt.
- In Figur 3: ist der Segmentschneckenförderer perspektivisch in seinem prinzipiellen Aufbau dargestellt.
- In Figur 4: ist in einer schematischen perspektivischen Darstellung der Ein- und Austrag des zu konvertierenden Stoffs in einem Bioreaktor nach dem zweiten bevorzugten Ausführungsbeispiel erkennbar.

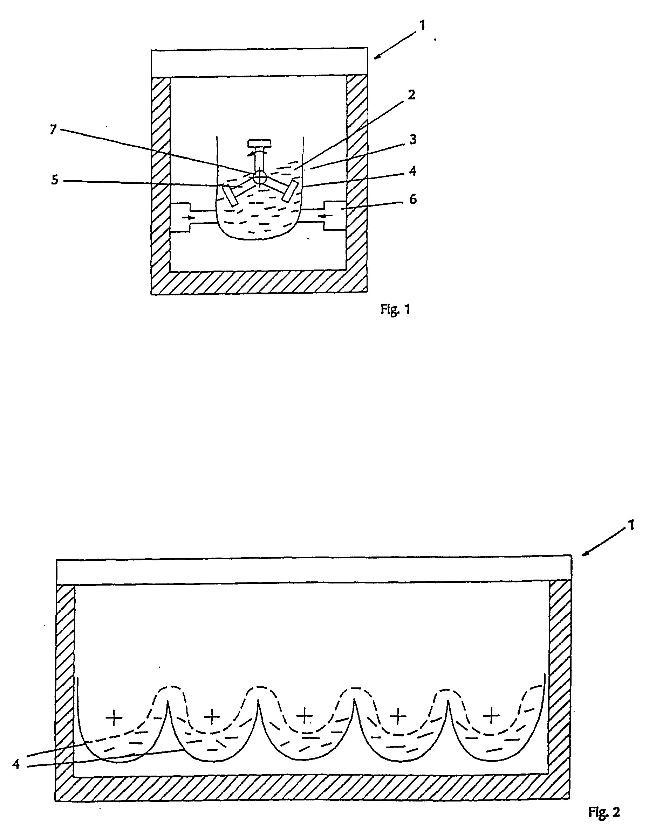

Figur 1 zeigt den Querschnitt durch eine erste bevorzugte Ausführungsform eines Bioreaktors 1 zur mikrobiellen Konvertierung stückiger und/oder pastöser Stoffe 2 mit nur einer Reaktorwanne 4. Bei dem dargestellten erfindungsgemäßen Bioreaktor 1 handelt es sich um einen Reaktor zum aeroben Abbau des organischen Anteiles von stückigen und/oder pastösen Abfallstoffen 2. Der erfindungsgemäße Bioreaktor ist jedoch auch zur anaeroben Biogasgewinnung oder für ähnliche Zwecke einsetzbar.

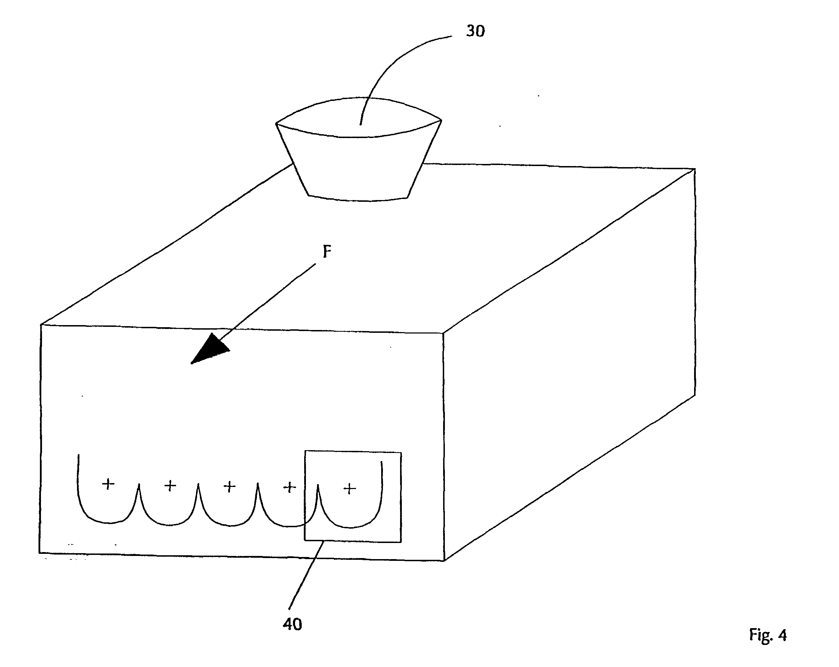

Die zu konvertierenden Stoffe werden, wie dies in Figur 4 anhand eines Reaktors mit mehreren Reaktorwannen dargestellt ist, über eine Eintragseinrichtung 30 in den Reaktor eingebracht. Die Eintragseinrichtung kann ein oberhalb der Reaktorwanne angeordneter Trichter oder auch nur eine Einfüllöffnung sein. Die Einfüllöffnung kann auch seitlich des Anfanges der Reaktorwanne 4 angeordnet sein, und der Eintrag der zu konvertierenden Stoffe kann über ein Förderband oder einen Kipplader erfolgen. Beim Eintrag bewegt sich ein in der Reaktorwanne 4 koaxial zur axialen Längsrichtung im halbkreisbogenförmigen Bereich des U-förmigen Querschnittes der Reaktorwanne 4 angeordneter Segmentschneckenförderer 5 in Förderrichtung F, um die Stoffe 2 in der gesamten Reaktorwanne 4 gleichmäßig zu verteilen.

Sobald die Reaktorwanne 4 gleichmäßig gefüllt ist, was z. B. über in der Wanne 4 angeordnete, nicht dargestellte Massesensoren erfaßt und signalisiert werden kann, wird durch eine ebenfalls nicht dargestellte zentrale Steuereinrichtung die Förderbewegung des Segmentschneckenförderers 5 in Förderrichtung abgeschaltet und gleichzeitig eine Gas und/oder Flüssigkeit führende Einrichtung 6 eingeschaltet.

Die Einrichtung 6 dient in erster Linie dazu, ein für die Konvertierung der in der Reaktorwanne befindlichen Stoffe 2 erforderliches Reaktionsgas möglichst intensiv mit der Oberfläche der Stoffe 2 in Berührung zu bringen. Dies geschieht erfindungsgemäß in der Weise, daß zumindest ein Teil der Gas und/oder Flüssigkeit führenden Einrichtungen im halbbogenförmigen Bereich der Reaktorwanne 4 unterhalb der Achse 7 des Segmentschneckenförderers 5 zur Gas- und/oder Flüssigkeitsein- oder -ausleitung angeordnet ist.

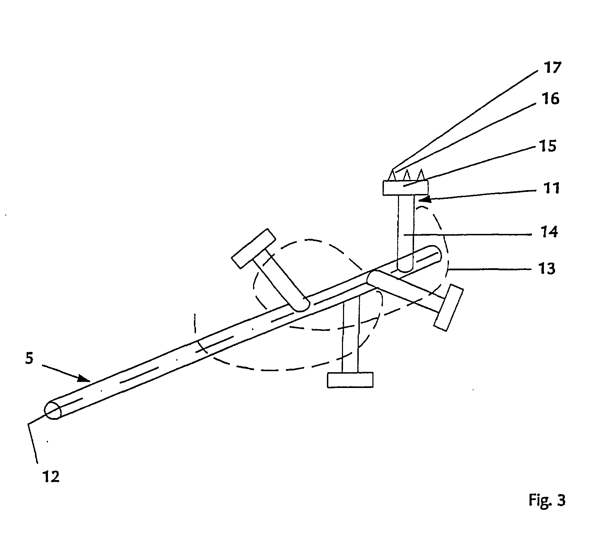

Gleichzeitig mit dem Durchströmen der Stoffe 2 durch Gas und Flüssigkeit beginnt auch die programmierte Bewegung der Stoffe durch den Segmentschneckenförderer 5. Der Segmentschneckenförderer 5 besitzt Fördersegmente 11 (siehe Figur 3), die um eine Mittelachse 12 in einer Schraubenlinie 13 winklig und axial vorzugsweise gleichmäßig beabstandet angeordnet sind. Die Fördersegmente 11 umfassen ein von der Mittelachse 12 des Segmentschneckenförderers 5 radial abstehendes Schaftteil 14 und ein mit dem äußeren Ende des Schaftteils 14 verbundenes, quer zum Schaftteil 14 angeordnetes Kopfteil 15.

Das Kopfteil kann zweckmäßig eine zur Mittelachse 12 des Segmentschneckenförderers 5 bogensegmentförmig verlaufende Form aufweisen und in Richtung der Steigung der Schraubenlinie 13 angeordnet sein.

In einer vorteilhaften Ausführungsform des erfindungsgemäßen Bioreaktors können die bogensegmentförmigen Kopfteile 15 an ihrer radialen Außenfläche nach außen vorstehende Zahnelemente 17 aufweisen. Diese Zahnelemente dienen dazu, eventuelle Anbackungen von zähen Stoffen an der Innenfläche des halbkreisbogenförmigen Bereiches der Reaktorwanne zu lösen. Die in die Reaktorwanne 4 eingebrachten Stoffe 2 werden durch programmierten Antrieb des Segmentschneckenförderers in der Reaktorwanne 4 in Förderrichtung F und entgegen der Förderrichtung hin- und herbewegt und durch die Fördersegmente 11 ständig aufgemischt. Durch diese programmierte Bewegung der Stoffe und das gleichzeitige Durchströmen der Stoffe durch die Reaktionsgase und durch in den Stoffen vorhandene oder zusätzlich zugeleitete Flüssigkeiten kommt ein sehr intensiver Kontakt der Reaktionsgase mit den Stoffoberflächen zustande, wodurch eine rasche mikrobielle Konvertierung der Stoffe 2 einsetzt und abläuft.

Die Reaktionsgase, z. B. Luft, Sauerstoff usw. werden zumindest teilweise im halbkreisbogenförmigen Bereich der Reaktorwanne 4 entweder unter Druck in die Stoffe 2 eingeblasen oder unter Vakuumwirkung durch die Stoffe 2 hindurchgesaugt.

Zweckmäßigerweise erfolgt der Eintrag von einem Teil der Reaktionsgase gleichzeitig auch im Freibord von oberhalb der Stoffe 2, so daß ein allseitiger Kontakt der Stoffoberflächen mit stets frisch zugeführten Reaktionsgasen zustandekommt.

Die mikrobielle Reaktion kann mittels der (nicht dargestellten) zentralen Steuereinrichtung in der Weise gesteuert werden, daß über in der Reaktorwanne 4 angeordnete Wärmemeßsonden die aktuelle Reaktortemperatur gemessen wird und die Meßsignale der zentralen Steuereinrichtung zugeleitet werden.

Die Steuereinrichtung kann durch Intensivierung oder Reduzierung der Bewegung des Segmentschneckenförderers 5 oder durch Erhöhung oder Drosselung der Zufuhr von Reaktionsgas auf den Ablauf der mikrobiellen Reaktion gezielt und wirkungsvoll Einfluß nehmen, so daß Überreaktionen, z. B. Verbrennungen, ebenso entgegengewirkt werden kann wie einer zu geringen oder fehlenden Reaktion.

Die Einleitung der Reaktionsgase in die Reaktorwanne in den halbkreisbogenförmigen Bereich der Reaktorwanne 4 unterhalb der Achse 7 des Segmentschneckenförderers 5 unter Druck bzw. die Durchleitung durch die in der Reaktorwanne 4 bewegten Stoffe 2 unter Vakuumwirkung erfolgt zweckmäßig durch Einrichtungen 6, welche ein Endteil aufweisen, das als Lochblech ausgebildet und bündig in die Wand der Reaktorwanne integriert ist.

Die Ein- oder Ausleitung von Gasen und Flüssigkeiten in die Stoffe 2 oder aus diesen kann aber auch in anderer Weise, z. B. durch in das Innere der Reaktorwanne 4 ragende Düsen mit einer oder mehreren Düsenöffnungen erfolgen.

Zur Steuerung der mikrobiellen Reaktion kann der Segmentschneckenförderer in Zeitintervallen betätigt werden und z. B. über einen Zeitraum Z1 in Förderrichtung F und über einen weiteren Zeitraum Z2 entgegen der Förderrichtung F angetrieben werden.

Bei dem Bioreaktor nach dem ersten Ausführungsbeispiel mit nur einer Reaktorwanne 4 sind die Zeiträume Z1 und Z2 gleich groß, damit die Stoffe 2 in der Reaktorwanne tatsächlich lediglich hin- und herbewegt und durchmischt werden.

In dem Bioreaktor nach dem zweiten Ausführungsbeispiel, welcher in den Figuren 2 und 4 schematisch dargestellt ist, und welcher mehrere parallel nebeneinander angeordnete Reaktorwannen 4 umfaßt, soll die Bewegung der Segmentschneckenförderer auch eine allmähliche Weiterbewegung der eingetragenen Stoffe von der einen zur jeweils nächsten Wanne über die Seitenkante der Wanne bewirken, so daß vom Eintrag der Stoffe am Anfang der ersten Wanne bis zum Austrag der konvertierten Stoffe am Ende der letzten Wanne oder über die Seitenkante der letzten Wanne hinweg ein kontinuierlicher oder quasikontinuierlicher Konvertierungsprozeß abläuft. Um eine solche Weiterförderung der eingetragenen Stoffe zu erreichen, muß der Zeitraum Z2, d. h. die Rückwärtsbewegung, kürzer sein als der Zeitraum Z1, in welchem die Vorwärtsbewegung stattfindet.

Zur Optimierung der mikrobiellen Konversion sind geringe Drehgeschwindigkeiten des Segmentschneckenförderers 5 mit bis zu 10 Umdrehungen pro Stunde zweckmäßig.

Zur Energieoptimierung ist es zweckmäßig, dem abzuführenden Reaktionsgas, das durch die bei der Reaktion entstehende Wärme erwärmt wird, die überschüssige Wärme über einen Wärmetauscher zu entziehen und mit dieser Wärme das zugeführte Reaktionsgas zu erwärmen, um den mikrobiellen Prozeß zusätzlich zu beschleunigen.

Um die Einleitung des mikrobiellen Prozesses bei neu zugeführten Stoffen zu beschleunigen, ist es zweckmäßig, die neu eingetragenen Stoffe durch zusätzliche Beimpfung mit ausgetragenem, von Mikroben durchsetztem Material zu versehen oder die Stoffe der vorausgehenden Charge nicht vollständig auszutragen und das neu eingetragene Material in dieser Weise zu beimpfen.

Vor allem beim Austrag der Stoffe kann es zweckmäßig sein, die mindestens eine Reaktorwanne 4 oder den gesamten Bioreaktor in Längsrichtung um bis zu 90° anzukippen.

Der erfindungsgemäße Bioreaktor hat gegenüber den bekannten Bioreaktoren den Vorteil, daß der Kontakt zwischen den zu konvertierenden Stoffen und dem Reaktionsgas wesentlich inniger ist, wodurch die Reaktion wesentlich besser steuerbar ist und die Reaktionszeit verkürzt werden kann.

Außerdem werden die Stoffe besser aufgelockert und im Zusammenwirken mit den Fördersegmenten sind Behinderungen der Funktion des Segmentschneckenförderers oder Havarien infolge von Verstopfungen oder dergleichen praktisch ausgeschlossen.

## Patentansprüche

1. Bioreaktor (1) zur mikrobiellen Konvertierung stückiger und/oder pastöser Stoffe (2) mit einem gegenüber der Umgebung wärmeisolierten Reaktionsraum (3), welcher mindestens eine Reaktorwanne (4) mit im Wesentlichen U-förmigen Querschnitt, einen in der oder jeder Reaktorwanne (4) koaxial zu deren Längsrichtung angeordneten, sich im halbkreisbogenförmigen Bereich des U-förmigen Querschnittes drehenden Segmentschneckenförderer (5), Gas und/oder Flüssigkeit führende Einrichtungen (6), sowie mindestens je eine Ein- und Austragseinrichtung (30, 40) für die zu konvertierenden Stoffe umfasst, wobei zumindest ein Teil der Gas und/oder Flüssigkeit führenden Einrichtungen (6) im halbkreisbogenförmigen Bereich der Reaktorwanne (4) unterhalb der Achse (7) des Segmentschneckenförderers (5) angeordnet ist, **dadurch gekennzeichnet, dass** die im halbkreisbogenförmigen Bereich angeordneten Gas und/oder Flüssigkeit führenden Einrichtungen (6) ein Endteil aufweisen, das als Lochblech ausgebildet und bündig in die Wand der Reaktorwanne (4) integriert ist.

2. Bioreaktor nach Anspruch 1, **dadurch gekennzeichnet, dass** die im halbkreisbogenförmigen Bereich angeordneten Gas und/oder Flüssigkeit führenden Einrichtungen (6) das Gas bzw. die Flüssigkeit unter Druckwirkung in die in der Reaktorwanne (4) bewegten Stoffe (2) einbringen.

3. Bioreaktor nach Anspruch 1, **dadurch gekennzeichnet, dass** die im halbkreisbogenförmigen Bereich angeordneten Gas und/oder Flüssigkeit führenden Einrichtungen (6) das Gas bzw. die Flüssigkeit unter Vakuumwirkung durch die in der Reaktorwanne bewegten Stoffe (2) hindurchtreten lassen.

4. Bioreaktor nach mindestens einem der vorhergehenden Ansprüche, **dadurch gekennzeichnet, dass** mindestens zwei Reaktorwannen (4) parallel nebeneinander angeordnet sind.

5. Bioreaktor nach mindestens einem der vorhergehenden Ansprüche, **dadurch gekennzeichnet, dass** der Segmentschneckenförderer (5), Fördersegmente (11) umfasst, die um dessen Mittelachse (12) im Verlauf einer Schraubenlinie (13) winklig und axial beabstandet angeordnet sind.

6. Bioreaktor nach mindestens einem der vorhergehenden Ansprüche, **dadurch gekennzeichnet, dass** die Fördersegmente (11) ein von der Mittelachse (12) des Segmentschneckenförderers (5) radial abstehendes Schaftteil (14) und ein mit dem äußeren Ende des Schaftteiles (14) verbundenes, quer zum Schaftteil (14) angeordnetes Kopfteil (15) umfassen.

7. Bioreaktor nach Anspruch 8, **dadurch gekennzeichnet, dass** die Kopfteile (15) der Fördersegmente (11) am äußeren Ende der Schaftteile (14) bogensegmentförmig zur Mittelachse (12) des Segmentschneckenförderers (5) angeordnet sind.

8. Bioreaktor nach Anspruch 8 und/oder 9, **dadurch gekennzeichnet, dass** die Kopfteile (15) in Richtung der Steigung der Schraubenlinie (13) angeordnet sind.

9. Bioreaktor nach mindestens einem der Ansprüche 8 bis 10, **dadurch gekennzeichnet, dass** mit der radialen Außenfläche jedes Kopfteiles (15) nach außen vorstehende Zahnelemente (17) verbunden sind.

10. Bioreaktor nach mindestens einem der vorhergehenden Ansprüche, **dadurch gekennzeichnet, dass** der oder die Segmentschneckenförderer (5) programmiert angetrieben ist (sind).

11. Bioreaktor nach Anspruch 12, **dadurch gekennzeichnet, dass** der oder die Segmentschneckenförderer (5) in Zeitintervallen betätigt und über einen Zeitraum (Z1) in Förderrichtung (F) und über einen Zeitraum (Z2) entgegen der Förderrichtung (F) angetrieben ist (sind).

12. Bioreaktor nach Anspruch 13, **dadurch gekennzeichnet, dass** die Zeiträume (Z1) und (Z2) im Wesentlichen gleich sind.

13. Bioreaktor nach Anspruch 13, **dadurch gekennzeichnet, dass** der Zeitraum (Z2) kürzer ist als der Zeitraum (Z1).

14. Bioreaktor nach mindestens einem der Ansprüche 12 bis 15, **dadurch gekennzeichnet, dass** der oder die Segmentschneckenförderer (5) mit einer geringen Drehgeschwindigkeit von <10 Umdrehungen je Stunde angetrieben ist (sind).

15. Bioreaktor nach mindestens einem der vorhergehenden Ansprüche, **dadurch gekennzeichnet, dass** die Eintragseinrichtung (30) am Förderanfang der (bzw. der ersten) Reaktorwanne (4) und die Austragseinrichtung hinter dem Ende oder neben der freiliegenden Querseite der (bzw. der letzten) Reaktorwanne (4) angeordnet ist.

16. Bioreaktor nach mindestens einem der vorhergehenden Ansprüche, **dadurch gekennzeichnet, dass** die Reaktorwanne bzw. die Reaktorwannen (4) oder der gesamte Bioreaktor (1) aus der horizontalen Hauptfunktionslage in Längsrichtung um bis zu 90° kippbar ist.

17. Bioreaktor nach mindestens einem der vorhergehenden Ansprüche, **dadurch gekennzeichnet, dass** er mindestens eine Wärmetausch- und Filtereinrichtung zum Wärmeentzug und zur Filterung der auszuleitenden Gase und zur Vorwärmung der einzuleitenden Gase umfasst.

## Claims

1. A bioreactor (1) for the microbial conversion of lumpy or soft substances including a reaction space (2), which is heat insulated from the environment and includes at least one reactor tank (4) with a substantially U-shaped cross-section, a segmental screw conveyor (5), which is arranged in the or each reactor tank (4) coaxially with its longitudinal direction and rotates in the semicircular arcuate shaped region of the U-shaped cross-section, and at least one feed device and discharge device (30, 40) for the substances to be converted, whereby at least a proportion of the devices (6) conducting the gas and/or liquid is arranged in the semicircular arcuate shaped region of the reactor tank (4) below the shaft (7) of the segmental screw conveyor (5), **characterised in that** the devices (6), which are arranged in the semicircular arcuate shaped region and conduct gas and/or liquid, have an end member, which is constructed in the form of an apertured plate and is integrated flush into the wall of the reactor tank (4).

2. A bioreactor as claimed in Claim 1, **characterised in that** the devices (6), which are arranged in the semicircular arcuate shaped region and conduct gas and/or liquid, introduce the gas or liquid under the action of pressure into the substances (2) moved within the reactor tank (4).

3. A bioreactor as claimed in Claim 1, **characterised in that** the devices (6), which are arranged in the semicircular arcuate shaped region and conduct gas and/or liquid, permit the gas or liquid to pass under the action of vacuum through the substances (2) moved in the reactor tank.

4. A bioreactor as claimed in at least one of the preceding claims, **characterised in that** at least two reactor tanks are arranged parallel next to one another.

5. A bioreactor as claimed in at least one of the preceding claims, **characterised in that** the segmental screw conveyor (5) includes conveying segments (11) which are arranged at an angular and axial spacing around its central axis (12) in the shape of a helical line (13).

6. A bioreactor as claimed in at least one of the preceding claims, **characterised in that** the conveying segments (11) include a shaft portion (14), which projects radially from the central axis (12) of the segmental screw conveyor (5), and a head portion (15), which is connected to the outer end of the shaft portion (14) and is arranged transversely to the shaft portion (14).

7. A bioreactor as claimed in Claim 8, **characterised in that** the head portions (15) of the conveyor segments (11) are arranged at the outer end of the shaft portions (14) in a segmental arc shape with respect to the central axis (12) of the segmental screw conveyor (5).

8. A bioreactor as claimed in Claim 8 and/or 9, **characterised in that** the head portions (15) are arranged in the direction of the pitch of the helical line (13).

9. A bioreactor as claimed in at least one of Claims 8 to 10, **characterised in that** connected to the radial outer surface of each head portion (15) there are outwardly projecting tooth elements (17).

10. A bioreactor as claimed in at least one of the preceding claims, **characterised in that** the segmental screw conveyor(s) (5) is(are) driven in a programmed manner.

11. A bioreactor as claimed in Claim 12, **characterised in that** the segmental screw conveyor(s) (5) is(are) actuated at time intervals and for a period of time (Z1) in the conveying direction (F) and for a period of time (Z2) opposite to the conveying direction (F).

12. A bioreactor as claimed in Claim 13, **characterised in that** the periods of time (Z1) and (Z2) are substantially the same.

13. A bioreactor as claimed in Claim 13, **characterised in that** the period of time (Z2) is shorter than the period of time (Z1).

14. A bioreactor as claimed in at least one of Claims 12 to 15, **characterised in that** the segmental screw conveyor(s) (5) is(are) rotated at a low rotary speed of <10 revolutions per hour.

15. A bioreactor as claimed in at least one of the preceding claims, **characterised in that** the feed device (30) is arranged at the conveyor input of the (or of the first) reactor tank (4) and the discharge device is arranged behind the end or adjacent the exposed transverse side of the (or of the last) reactor tank (4).

16. A bioreactor as claimed in at least one of the preceding claims, **characterised in that** the reactor tank or the reactor tanks (4) or the entire bioreactor (1) is tiltable through up to 90° in the longitudinal direction out of the horizontal main functioning position.

17. A bioreactor as claimed in at least one of the preceding claims, **characterised in that** it includes at least one heat exchange and filter device for removing heat and for filtering the gases to be discharged and for preheating the gases to be introduced.

## Revendications

1. Bioréacteur (1) pour la conversion microbienne de substances en morceaux et/ou pâteuses (2) avec un espace de réaction (3) isolé thermiquement par rapport à l'environnement qui comprend au moins une cuve de réacteur (4) avec une section transversale sensiblement en forme de U, une vis convoyeuse segmentée (5) disposée dans la ou dans chaque cuve de réacteur (4) de manière coaxiale à son sens longitudinal, tournant dans la zone en forme d'arc en demi-cercle de la section transversale en forme de U, des dispositifs d'alimentation de gaz et/ou de liquide (6), ainsi qu'au moins un dispositif d'amenée et d'évacuation (30, 40) pour les substances à convertir, moyennant quoi au moins une partie des dispositifs d'alimentation de gaz et/ou de liquide (6) dans la zone en forme d'arc en demi-cercle de la cuve de réacteur (4) est disposée en dessous de l'axe (7) de la vis convoyeuse segmentée (5), **caractérisé en ce que** les dispositifs d'alimentation de gaz et/ou de liquide (6) disposés dans la zone en forme d'arc en demi-cercle comportent une partie d'extrémité qui est configurée comme une tôle perforée et qui est intégrée au ras de la paroi de la cuve de réacteur (4).

2. Bioréacteur selon la revendication 1, **caractérisé en ce que** les dispositifs d'alimentation de gaz et/ou de liquide (6) disposés dans la zone en forme d'arc en demi-cercle introduisent le gaz ou le liquide dans les substances (2) en mouvement dans la cuve de réacteur (4) sous l'effet de la pression.

3. Bioréacteur selon la revendication 1, **caractérisé en ce que** les dispositifs d'alimentation de gaz et/ou de liquide (6) disposés dans la zone en forme d'arc en demi-cercle laissent passer le gaz ou le liquide à travers les substances (2) en mouvement dans la cuve de réacteur sous l'effet du vide.

4. Bioréacteur selon au moins des revendications précédentes, **caractérisé en ce qu'**au moins deux cuves de réacteur (4) sont disposées parallèlement l'une à côté de l'autre.

5. Bioréacteur selon au moins l'une des revendications précédentes, **caractérisé en ce que** la vis convoyeuse segmentée (5) comprend des segments convoyeurs (11) qui sont disposés de manière angulaire et axiale autour de l'axe médian de celle-ci (12), sur le trajet d'une hélice (13).

6. Bioréacteur selon au moins l'une des revendications précédentes, **caractérisé en ce que** les segments convoyeurs (11) comprennent une partie de corps (14) s'écartant radialement de l'axe médian (12) de la vis convoyeuse segmentée (5) et une partie de tête (15) reliée à l'extrémité extérieure de la partie de corps (14), disposée perpendiculairement à la partie de corps (14).

7. Bioréacteur selon la revendication 8, **caractérisé en ce que** les parties de corps (15) des segments convoyeurs (11) sont disposées à l'extrémité extérieure des parties de corps (14), en forme d'arc en demi-cercle par rapport à l'axe médian (12) de la vis convoyeuse segmentée (5).

8. Bioréacteur selon la revendication 8 et/ou 9, **caractérisé en ce que** les parties de tête (15) sont disposées dans la direction du pas de l'hélice (13).

9. Bioréacteur selon au moins l'une des revendications 8 à 10, **caractérisé en ce que** des éléments de denture (17) faisant saillie vers l'extérieur sont raccordés à la face extérieure radiale de chaque partie de tête (15).

10. Bioréacteur selon au moins l'une des revendications précédentes, **caractérisé en ce que** la ou les vis convoyeuse(s) segmentée(s) (5) est(sont) entraînée(s) de manière programmée.

11. Bioréacteur selon la revendication 12, **caractérisé en ce que** la ou les vis convoyeuse(s) segmentée(s) (5) est(sont) actionnée(s) à des intervalles de temps et entraînée(s) pendant une durée (Z1) dans le sens de transport (F) et pendant une durée (Z2) dans le sens inverse au sens de transport (F).

12. Bioréacteur selon la revendication 13, **caractérisé en ce que** la durée (Z1) et la durée (Z2) sont sensiblement les mêmes.

13. Bioréacteur selon la revendication 13, **caractérisé en ce que** la durée (Z2) est plus courte que la durée (Z1).

14. Bioréacteur selon au moins l'une des revendications 12 à 15, **caractérisé en ce que** la ou les vis convoyeuse(s) segmentée(s) (5) est(sont) entraînée(s) à une faible vitesse de rotation de <10 tours par heure.

15. Bioréacteur selon au moins l'une des revendications précédentes, **caractérisé en ce que** le dispositif d'amenée (30) est disposé à l'entrée de refoulement de la (ou de la première) cuve de réacteur (4) et le dispositif d'évacuation est disposé derrière l'extrémité ou près du côté transversal dégagé de la (ou de la dernière) cuve de réacteur (4).

16. Bioréacteur selon au moins l'une des revendications précédentes, **caractérisé en ce que** la cuve de réacteur ou les cuves de réacteur (4) ou l'ensemble du bioréacteur (1) peut basculer dans le sens longitudinal de la position de fonctionnement principale horizontale jusqu'à 90°.

17. Bioréacteur selon au moins l'une des revendications précédentes, **caractérisé en ce qu'**il comprend au moins un dispositif d'échange de chaleur et de filtrage pour l'extraction de chaleur et pour le filtrage des gaz à évacuer et pour le préchauffage des gaz à introduire.
